# EUROPÄISCHE PATENTSCHRIFT

(11) **EP 2 094 997 B1**
(45) Veröffentlichungstag und Bekanntmachung des Hinweises auf die Patenterteilung: **11.05.2011**
(21) Anmeldenummer: 07817737.5
(22) Anmeldetag: 23.10.2007
(51) Int. Cl.: F16J 1/16

(54) **KOLBEN FÜR EINEN VERBRENNUNGSMOTOR**
PISTON FOR AN INTERNAL COMBUSTION ENGINE
PISTON POUR UN MOTEUR THERMIQUE

(30) Priorität: 25.11.2006 DE 102006055726
(43) Veröffentlichungstag der Anmeldung: 02.09.2009
(73) Patentinhaber: MAHLE International GmbH, 70376 Stuttgart (DE)
(72) Erfinder: KEMNITZ, Peter, 71397 Leutenbach (DE)
(74) Vertreter: Pohle, Reinhard
(86) Internationale Anmeldenummer: PCT/DE2007/001903
(87) Internationale Veröffentlichungsnummer: WO 2008/061487

(56) Entgegenhaltungen:
- WO-A-2007/025733
- DE-A1- 4 111 368
- DE-A1- 4 431 990
- DE-A1-102005 055 365

## Beschreibung

Die vorliegende Erfindung betrifft einen Kolben für einen Verbrennungsmotor mit einem Kolbenkopf und einem Kolbenschaft mit integrierten Kolbennaben, die jeweils mit einer Nabenbohrung zur Aufnahme eines Kolbenbolzens versehen sind, wobei die Kolbennaben die Form einer Trapez- oder stufenförmigen Abstützung aufweise, bei der die Innenflächen der Kolbennaben einen spitzen Winkel zur Kolbenmittelachse einschließen, wobei jede Nabenbohrung als Formbohrung ausgebildet ist, die zumindest in ihrem Bereich aufgeweitet ist.

Aus der DE 44 31 990 A1 ist ein Leichtmetallkolben für hoch belastete Verbrennungsmotoren bekannt, bei dem zur Vermeidung von Nabenrissen, insbesondere infolge der Durchbiegung von Kolbenbolzen bei hoher Kolbenbelastung durch den Zünddruck, die Kolbenbolzennaben ais so genannte Formbohrungen ausgebildet sind. Zu diesem Zweck sind die Nabenbohrungen im Bereich ihrer Enden aufgeweitet ausgebildet, um Reibungen und Druckbelastungen zwischen dem Kolbenbolzen und den Nabenbohrungen weitgehend auszuschließen.

In der DE 41 11 368 A1 ist ein Kolben für Verbrennungsmotoren offenbart, dessen Bohrung für einen Kolbenbolzen in seinen Endbereichen radial aufgeweitet ist. Die internationale Patentanmeldung WO 2007/025733 A1 zeigt einen Kolben für eine Brennkraftmaschine, deren Bolzenbohrung in axialer Richtung in drei Abschnitte I, II und III unterteilt ist, die oval, kreisrund, zylindrisch oder dergleichen geformt sind, wobei die Übergänge zwischen den Abschnitten verlaufend ausgebildet sind.

Bei einem Kolben mit Trapezanbindung (sowohl mit glatten als auch mit stufenförmigen Innenflächen) ist eine solche Aufweitung problematisch, da sie im unteren Bereich der Nabenbohrung zu gering ausgebildet ist und/oder im oberen Bereich der Nabenbohrung eine zu große und damit eine zu grobe Stufe aufweist. Das kann bei sehr hoher Belastung und erheblicher Verbiegung des Kolbens zu sehr hohen punktförmigen Beanspruchungen zwischen Kolbenbolzen und Nabenbohrung führen, so dass trotz der Aufweitung Nabenrisse auftreten können.

Zur Lösung dieser Aufgabe wird ein Kolben mit den Merkmalen des Patentanspruchs 1 vorgeschlagen. Erfindungsgemäß ist vorgesehen, dass die Aufweitung stufenförmig verläuft und sich in Richtung des inneren Endes (18") der Nabenbohrung (18) unter Ausbildung von Facetten (120, 220) auf der Mantelfläche (18') der Nabenbohrung (18) vergrößert und dass die Facetten (120, 220) einen spitzen Winkel (α, β) zur Kolbenmittelachse (M) einschließen.

Der erfindungsgemäße Gedanke besteht somit darin, dass die zur stufenförmig verlaufenden Aufweitung der Nabenbohrung führenden Facetten nicht, wie bspw. in der DE 44 31 990 A1 parallel zur Kolbenmittelachse verlaufen. Die Facetten verlaufen vielmehr in einem spitzen Winkel zur Kolbenachse, also gewissermaßen "schräg" oder "geneigt".

Eine derartige erfindungsgemäße Ausbildung der Nabenbohrung eines Kolbens hat den Vorteil, dass der sich bei Belastung während des Betriebs verbiegende Kolbenbolzen sich sowohl im unteren Bereich der Nabenbohrung, dem Nadir, als auch im oberen Bereich der Nabenbohrung, dem Zenit, Flächenbereich für Flächenbereich (entsprechend der Breite der Facetten) auf der Mantelfläche der Nabenbohrung abwälzt. Die einzelnen Facetten bilden auf der Mantelfläche der Nabenbohrung Druckpunkte, an denen sich der während des Betriebs verbiegende Kolbenbolzen auf der Mantelfläche der Nabenbohrung abstützt. Dabei folgen die einzelnen Druckpunkte gleichmäßig verteilt aufeinander, während im Stand der Technik die Druckpunkte im Nadir der Nabenbohrung dicht gedrängt nebeneinander liegen, im ungünstigen Fall sogar auf der inneren Kante der Nabenbohrung liegen, während im Zenit eine zu große Stufe in der Formbohrung auftritt. Die erfindungsgemäße Ausgestaltung ermöglicht es, sowohl dem oberen Bereich als auch dem unteren Bereich einer Nabenbohrung eine optimale Gestaltung zu geben. Dies hat eine gleichmäßige Verteilung der auftretenden Belastungskräfte auf die Nabenbohrung und die Nabenanbindung zur Folge, was beispielsweise Nabenrisse weitgehend verhindert. Die Belastbarkeit unter Massenkraft ist somit spürbar verbessert.

Vorteilhafte Weiterbildungen ergeben sich aus den Unteransprüchen.

Der erfindungsgemäße Gedanke wird sowohl durch parallel zur Innenfläche der Kolbennabe als auch durch fächerförmig verlaufende Facetten erfüllt. Die Ausgestaltung hängt dabei von den Anforderungen des Einzelfalls ab. Die stufenförmig verlaufende Aufweitung der Nabenbohrung kann somit sowohl in ihrem unteren Bereich, also im Nadir, als auch in ihrem oberen Bereich, also im Zenit, entsprechend den jeweiligen Erfordernissen individuell gestaltet werden.

Ausführungsbeispiele der vorliegenden Erfindung werden im Folgenden anhand der beigefügten Zeichnungen erläutert. Es zeigen in einer schematischen, nicht maßstabsgetreuen Darstellung:
- Fig. 1: einen Kolben gemäß dem Stand der Technik in Frontansicht teilweise im Schnitt, wobei die linke Hälfte eine erste Variante A und die rechte Hälfte eine zweite Variante B des Standes der Technik zeigt;
- Fig. 2: ein Ausführungsbeispiel eines erfindungsgemäßen Kolbens in einer Teil- darstellung in Frontansicht teilweise im Schnitt;
- Fig. 3: ein weiteres Ausführungsbeispiel eines erfindungsgemäßen Kolbens in ei- ner Teildarstellung teilweise im Schnitt;
- Fig. 4: eine vergrößerte Darstellung der Anordnung und Ausbildung der Facetten gemäß Figur 3.

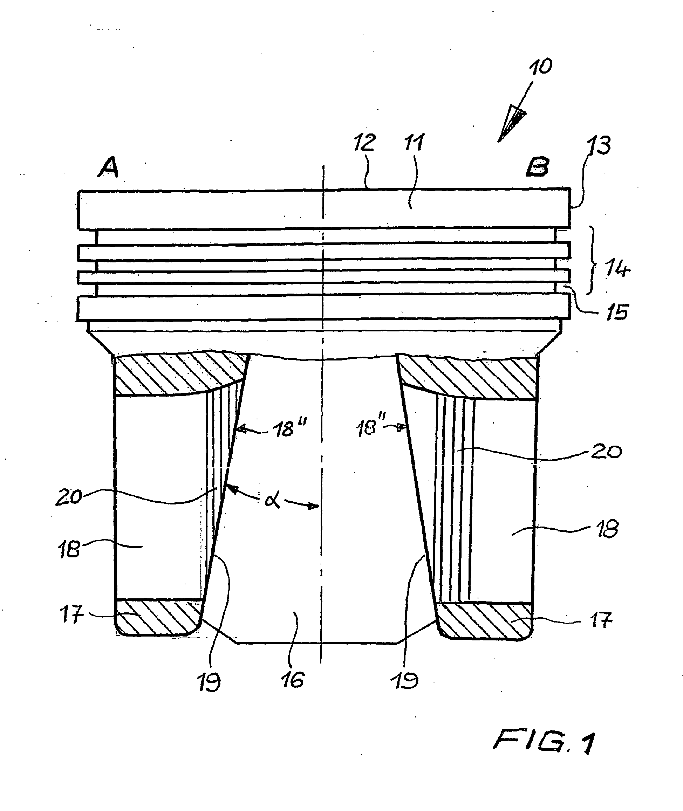

Figur 1 zeigt eines Kolben 10 gemäß dem Stand der Technik. Der im Ausführungsbeispiel einteilige Kolben 10 weist einen Kolbenkopf 11 mit einem Kolbenboden 12, einem umlaufenden Feuersteg 13 und einer umlaufenden Ringpartie 14 mit Ringnuten 15 für nicht dargestellte Kolbenringe auf. Unterhalb des Kolbenkopfes 11 sind ein Kolbenschaft 16 sowie Kolbennaben 17 mit Nabenbohrungen 18 zur Aufnahme eines Kolbenbolzens (nicht dargestellt) vorgesehen. Die Innenflächen 19 der Kolbennaben 17 schließen mit der Kolbenmittelachse M einen spitzen Winkel α ein und bilden somit eine Trapezabstützung für einen Pleuel (nicht dargestellt). Die Nabenbohrungen 18 sind als Formbohrungen ausgebildet, die sich im Ausführungsbeispiel in Richtung der inneren Enden 18" der Nabenbohrungen 18, also zur Kolbenmittelachse M hin, aufweiten, und zwar unter Ausbildung von Facetten 20 auf der Mantelfläche 18' der Nabenbohrungen 18. Die Facetten 20 verlaufen parallel zur Kolbenmittelachse M. Der Kolben 10 ist besteht aus einem beliebigen metallischen Material, bspw. Stahl oder einer Leichtmetalllegierung. Aus der linken Hälfte der Figur 1 ist ersichtlich, dass diejenige Variante A, bei der der obere Teil der Kolbennaben 17 mit Facetten 20 versehen ist, der untere Teil der Kolbennaben 17 keine Facetten aufweist. Aus der rechten Hälfte der Figur 1 ist ersichtlich, dass diejenige Variante B, bei der der untere Teil der Kolbennaben 17 mit Facetten 20 versehen ist, der obere Teil der Kolbennaben 17 eine vergrößerte Stufe auf der Mantelfläche 18' aufweist.

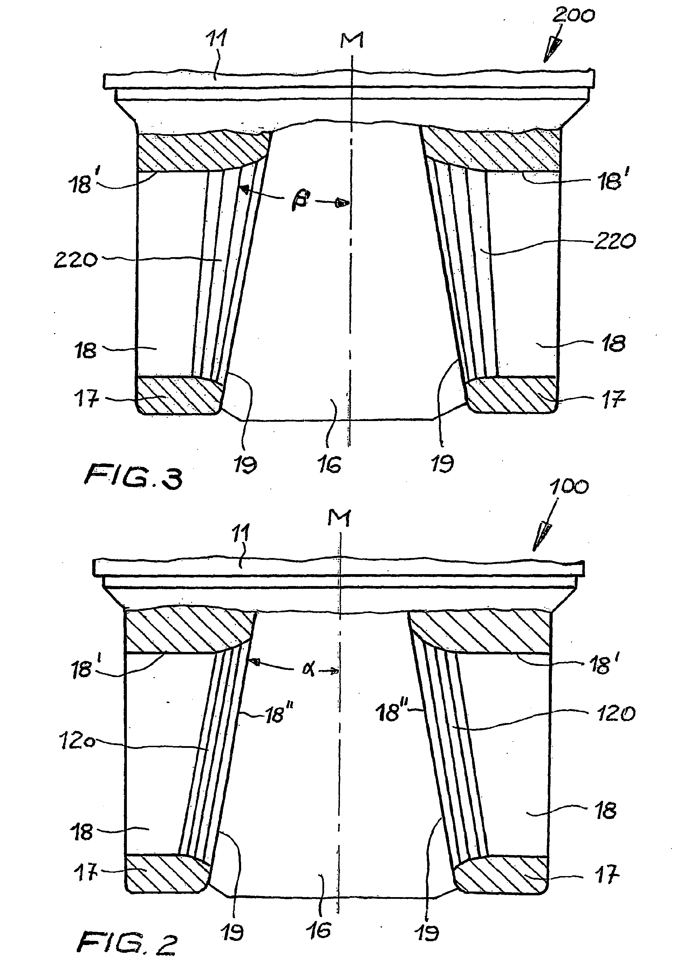

Figur 2 zeigt ein erstes Ausführungsbeispiel eines erfindungsgemäßen Kolbens 100, wobei mit dem gattungsgemäßen Kolben 10 gemäß Figur 1 gleiche Bauteile mit gleichen Bezugszeichen versehen sind. Der Kolben 100 ist im Prinzip genauso aufgebaut wie der Kolben 10 und daher nur teilweise dargestellt. Der wesentliche Unterschied zwischen dem gattungsgemäßen Kolben 10 und dem erfindungsgemäßen Kolben 100 besteht darin, dass zur stufenförmig verlaufenden Aufweitung der als Formbohrungen ausgebildeten Nabenbohrungen 18 entlang der Mantelfläche 18' der Nabenbohrungen 18 Facetten 120 ausgebildet sind, die parallel zur Innenfläche 19 der Kolbennabe 17 und somit auch parallel zueinander verlaufen und einen spitzen Winkel α zur Kolbenmittelachse M einschließen.

Figur 3 zeigt ein zweites Ausführungsbeispiel eines erfindungsgemäßen Kolbens 200, der im Prinzip wie der bereits beschriebene Kolben 100 gemäß Figur 2 aufgebaut ist. Zur Aufweitung der als Formbohrungen ausgebildeten Nabenbohrungen 18 sind entlang der Mantelfläche 18' der Nabenbohrungen 18 Facetten 220 ausgebildet sind, die fächerförmig verlaufen, das heißt, dass der Abstand der Facetten 220 zueinander im Nadir der Nabenbohrungen 18 geringer ist als im Zenit der Nabenbohrungen 18. Somit schließt auch jede Facette 220 einen spitzen Winkel zur Kolbenmittelachse M ein. Der Winkelbetrag ist für jede Facette 220 unterschiedlich. Daher ist in Figur 3 lediglich ein Winkel β beispielhaft dargestellt.

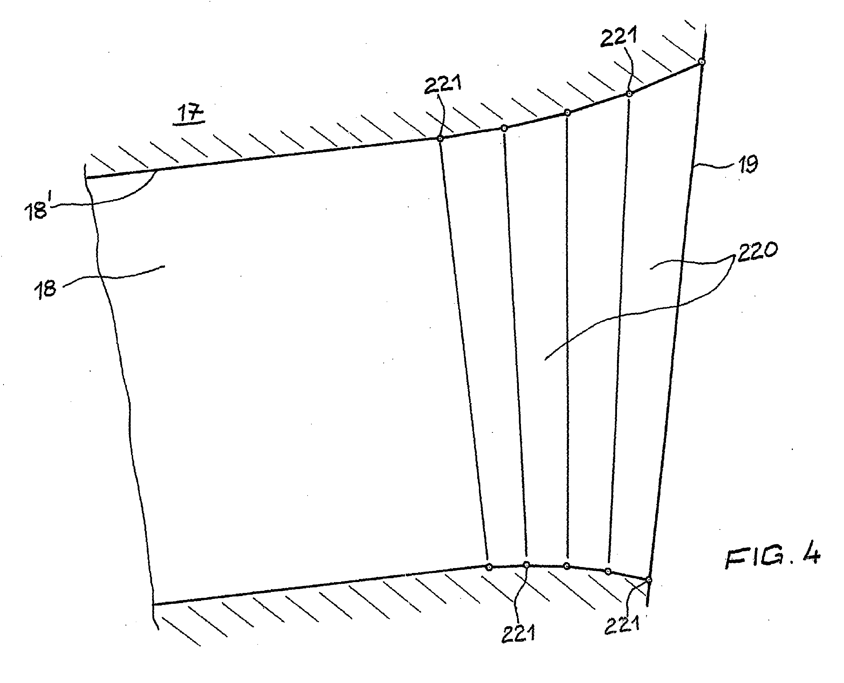

Figur 4 zeigt eine vergrößerte ausschnittsweise Darstellung einer Nabenbohrung 18gemäß Figur 3. In Figur 4 ist deutlich zu erkennen, dass die einzelnen Facetten 220 auf der Mantelfläche 18' der Nabenbohrung 18 Druckpunkte 221 bilden, an denen sich der während des Betriebs verbiegende Kolbenbolzen auf der Mantelfläche 18' der Nabenbohrung 18 abstützt. Die einzelnen Druckpunkte 221 folgen in annähernd gleichmäßigen Abständen, das heißt, gleichmäßig verteilt aufeinander. Das bedeutet, dass der sich bei Belastung während des Betriebs verbiegende Kolbenbolzen sich sowohl im Nadir als auch im Zenit der Nabenbohrung 18, Flächenbereich für Flächenbereich (entsprechend der Breite der Facetten) auf der Mantelfläche 18' der Nabenbohrung 18 abwälzt. Diese Überlegungen gelten selbstverständlich auch für parallel zur Innenfläche 19 der Kolbennabe 17 angeordnete Facetten 120, wie sie in Figur 2 dargestellt sind.

Beim Vergleich der erfindungsgemäßen Ausführungsformen gemäß den Figuren 2 bis 4 mit der Darstellung gemäß Figur 1 ist deutlich zu erkennen, dass bei parallel zur Kolbenmittelachse M ausgerichteten Facetten im Zenit der Nabenbohrung eine große Stufe gebildet wird, während im Nadir eine Kante gebildet ist, auf der sich der Kolbenbolzen punktförmig abstützt. Insgesamt sind die Facetten im Zenit zu weit im Inneren der Nabenbohrung 18 und im Nadir zu nahe am inneren Ende 18" der Nabenbohrung 18 angeordnet. Das bedeutet, dass die Nabenbohrung 18 durch den im Betrieb sich biegenden Kolbenbolzen äußerst ungleichmäßig belastet wird. Demgegenüber erlaubt die erfindungsgemäße Ausgestaltung und Anordnung der Facetten 120, 220 unter spitzem Winkel zur Kolbenmittelachse M eine gleichmäßige Verteilung der Facetten über die Nabenbohrung 18 hinweg, wobei diese Verteilung sehr gut individuellen Bedürfnissen bei der Kolbengestaltung angepasst werden kann. Damit werden die im Betrieb auftretenden Kräfte sehr gleichmäßig über die Nabenbohrung 18 und damit über die gesamte Kolbennabe 17 verteilt, so dass Schäden an der Nabenbohrung und am Kolbenbolzen weitgehend vermieden werden.

## Patentansprüche

1. Kolben (10) für einen Verbrennungsmotor mit einem Kolbenkopf (11) und einem Kolbenschaft (16) mit Kolbennaben (17), die jeweils mit einer Nabenbohrung (18) zur Aufnahme eines Kolbenbolzens versehen sind, wobei die Kolbennaben (17) die Form einer Trapez- oder stufenförmigen Abstützung aufweise, bei der die Innenflächen (19) der Kolbennaben (17) einen spitzen Winkel (α) zur Kolbenmittelachse (M) einschließen, wobei jede Nabenbohrung (18) als Formbohrung ausgebildet ist, die zumindest in ihrem inneren Bereich aufgeweitet ist, **dadurch gekennzeichnet, dass** die Aufweitung stufenförmig verläuft und sich in Richtung des inneren Endes (18") der Nabenbohrung (18) unter Ausbildung von Facetten (120, 220) auf der Mantelfläche (18') der Nabenbohrung (18) vergrößert und dass die Facetten (120, 220) einen spitzen Winkel (α, β) zur Kolbenmittelachse (M) einschließen.

2. Kolben nach Anspruch 1, **dadurch gekennzeichnet, dass** die Facetten (12) parallel zur Innenfläche (19) der Kolbennabe (17) verlaufen.

3. Kolben nach Anspruch 1, **dadurch gekennzeichnet, dass** die Facetten (220) fächerförmig verlaufen.

## Claims

1. Piston (10) for an internal combustion engine with a piston head (11) and a piston shaft (16) with pin hubs (17), which are each are provided with a hub bore (18) for receiving a piston pin, wherein the pin hubs (17) have the form of a trapezoidal or stepped support in which the inner surfaces (19) of the pin hubs (17) are at an acute angle (α) to the central axis of the piston (M), where each hub bore (18) is formed as a shaped bore, which Is expanded at least In its inner area, **characterized in that** the expansion runs stepwise and enlarges in the direction of the inner end (18") of the hub bore (18) to form facets (120, 220) on the lateral area (18') of the hub bore (18) and that the facets (120, 220) make an acute angle (α, β) with the central axis of the piston (M).

2. Piston according to claim 1, **characterized in that** the facets (12) run parallel to the Inner surface (19) of the pin hub (17).

3. Piston according to claim 1, **characterized in that** the facets (220) run in the shape of a fan.

## Revendications

1. Pistons (10) de moteur à explosion avec une tête de piston (11) et un corps de piston (16) avec des moyeux de piston (17) qui sont tous munis d'un trou de moyeu (18) pour fixer les axes de piston où les moyeux de piston (17) prennent la forme d'un trapèze ou d'un support en escalier où les surfaces Internes (19) des moyeux de piston (17) comprennent un angle aigu (α) à l'axe central du piston (M) où chaque trou de moyeu (18) prend la forme d'un moule d'alésage qui s'étend au moins dans son espace intérieur et cette étendue est **caractérisée par** une progression en escalier et qui s'agrandit en direction de l'extrémité Intérieure (18") du trou du moyeu (18) sous forme de facettes (120, 220) sur la surface latérale (18') du trou du moyeu (18) et ces facettes (120, 220) comprennent un angle aigu (α, β) à l'axe central du piston (M).

2. D'après la revendication 1, les pistons sont **caractérisés par le fait que** les facettes (12) progressent parallèlement à la surface interne (19) du moyeu du piston (17).

3. D'après la revendication 1, les pistons sont **caractérisés par le fait que** les facettes (220) progressent sous forme d'éventail.
